# EUROPÄISCHE PATENTSCHRIFT

(11) **EP 3 427 143 B1**
(45) Veröffentlichungstag und Bekanntmachung des Hinweises auf die Patenterteilung: **18.08.2021**
(21) Anmeldenummer: 17706247.8
(22) Anmeldetag: 21.02.2017
(51) Int. Cl.: G06F 3/14, G05B 19/418, H04L 29/06, H04W 4/00, H04L 29/08

(54) **VERFAHREN ZUM ERZEUGEN UND AKTUALISIEREN EINER FERNEN INSTANZ EINER SCHIRMANSICHT**
METHOD FOR GENERATING AND UPDATING A REMOTE INSTANCE OF A SCREEN VIEW
PROCÉDÉ DE GÉNÉRATION ET DE MISE À JOUR D'UNE INSTANCE ÉLOIGNÉE D'UN AFFICHAGE DE L'ÉCRAN

(30) Priorität: 07.03.2016 AT 501792016
(43) Veröffentlichungstag der Anmeldung: 16.01.2019
(73) Patentinhaber: AVL List GmbH, 8020 Graz (AT)
(72) Erfinder: ALDRIAN, Andreas, 8144 Haselsdorf-Tobelbad (AT); PRILLER, Peter, 8111 Gratwein-Straßengel (AT)
(74) Vertreter: Patentanwälte Pinter & Weiss OG
(86) Internationale Anmeldenummer: PCT/EP2017/053848
(87) Internationale Veröffentlichungsnummer: WO 2017/153159

(56) Entgegenhaltungen:
- DE-A1- 10 151 117
- DE-A1-102009 028 051
- US-A1- 2011 258 637
- US-A1- 2013 246 946
- US-A1- 2015 254 463
- US-A1- 2017 131 959

## Beschreibung

Die Erfindung betrifft ein Verfahren zum Erzeugen und Aktualisieren einer fernen Instanz einer Schirmansicht bei einem Kommunikationsgerät während einer Kommunikationssitzung, wobei die Schirmansicht eine Anzahl an Datenelementen aufweist, die gemäß einem definierten statischen oder dynamischen Anzeigeschema auf der Schirmansicht dargestellt werden. Weiters betrifft die Erfindung eine Vorrichtung zur Bereitstellung einer fernen Instanz einer Schirmansicht zur Anzeige an einem Kommunikationsgerät, wobei eine Computereinheit, an der die Schirmansicht angezeigt wird, über zumindest einen ersten Kommunikationspfad und zumindest einen zweiten Kommunikationspfad zum Kommunikationsgerät verfügt, und wobei die Schirmansicht eine Anzahl an Datenelementen aufweist, die gemäß einem definierten statischen oder dynamischen Anzeigeschema auf der Schirmansicht dargestellt werden. Schließlich betrifft die Erfindung ein von einem Kommunikationsgerät ausführbares Softwareprodukt zum Anzeigen einer fernen Instanz einer an einer fernen Computereinheit angezeigten Schirmansicht, wobei das Kommunikationsgerät über zumindest einen ersten Kommunikationspfad und zumindest einen zweiten Kommunikationspfad mit der Computereinheit in Verbindung steht

Mit zahlreichen Online-Collaboration-Tools ist es beispielsweise möglich, den eigenen Bildschirminhalt in Echtzeit mit einem oder mehreren Kommunikationspartner(n) zu "Teilen", wobei eine Bilddarstellung der Schirmansicht erstellt, über ein Netzwerk, im Allgemeinen das Internet, an den Computer des Kommunikationspartners übermittelt, und diese Bilddarstellung auf einem Bildschirm als ferne Instanz dargestellt wird.

Diese Online-Collaboration-Tools haben jedoch den Nachteil, dass an alle Kommunikationspartner immer der gesamte Bildschirminhalt übermittelt wird, auch wenn dieser Bildschirminhalt sensible Daten anzeigt, die nicht für diesen Kommunikationspartner bestimmt sind. Darüber hinaus ist es für den Kommunikationspartner im Allgemeinen nicht möglich, die Daten Computergestützt weiter auszuwerten, da die Bilddarstellung eine solche Datenauswertung nicht erlaubt.

DE 10151117 A1 offenbart ein Verfahren zur Bedienung von Feldgeräten, etwa in einer energietechnischen Anlage, mittels einer Nutzereinrichtung, an der eine Darstellung des Feldgerätes angezeigt wird. In dem Feldgerät ist eine Servereinrichtung ausgebildet und auf der Nutzereinrichtung ist eine Browser-Einrichtung installiert. Der Datenaustausch erfolgt über ein IP-Netzwerk. Zur Erhöhung der Sicherheit können Passwortabfragen (im Browser) vorgesehen sein und die Kommunikation kann verschlüsselt erfolgen.

US 2015/0254463 A1 offenbart ein Verfahren zur verschlüsselten Übermittlung von Sensordaten eines Sensornetzwerks an eine Service-Plattform über ein Weitverkehrsnetz (WAN).

DE 102009028051 A1 offenbart eine Vorrichtung zur Bedienung eines Feldgerätes über ein entferntes Terminal. Feldgerät und Terminal sind über einen Feldbus miteinander verbunden, der das TCP/IP-Protokoll oder ein anderes Protokoll nutzen kann. Das Terminal enthält einen Browser und das Feldgerät enthält einen WebServer, über den dynamisch erzeugte Inhalte (insb. Webseiten) an den Browser des entfernten Terminals übermittelt und dort angezeigt werden. Die Inhalte können über einen Plant Access Point bereitgestellt werden.

US 2011/0258637 A1 offenbart Kommunikationsverfahren und -systeme für industrielle Automatisierungskomponenten. Es werden Kommunikationsverfahren für Feldbusse offenbart, die gemäß einem Subscriber/Publisher-Modell funktionieren.

US 2013/0246946 A1 offenbart Verfahren und Vorrichtungen zum Teilen von Bildschirminformationen zwischen einem Hauptgerät und einer sekundären Anzeige. Zur Aktualisierung der Anzeige werden Daten von dem Hauptgerät über einen Remote Server zu der sekundären Anzeige übermittelt.

US 2017/0131959 A1 offenbart Verfahren und Systeme zur Anzeige von Displayinhalten einer Landwirtschaftsmaschine (etwa eines Traktors) auf einer sekundären Anzeige, die außerhalb der Landwirtschaftsmaschine angeordnet ist.

Die Nachteile des Standes der Technik werden erfindungsgemäß durch ein Verfahren gemäß Anspruch 1, ein System gemäß Anspruch 6 bzw. ein Softwareprodukt gemäß Anspruch 19 Vermiden. Ein dem Anzeigeschema der Schirmansicht zumindest teilweise entsprechendes Anzeigeschema wird zumindest ein erstes Mal über zumindest einen ersten Kommunikationspfad an das Kommunikationsgerät übermittelt, wobei die Werte von zumindest einem der Datenelemente während der Kommunikationssitzung über zumindest einen zweiten Kommunikationspfad an das Kommunikationsgerät übermittelt werden, und wobei die übermittelten Werte der Datenelemente und das übermittelte Anzeigeschema vom Kommunikationsgerät kombiniert werden, um die fernen Instanz anzuzeigen. Dies erlaubt es, die Daten bei der Übermittlung gesondert von dem Anzeigeschema besonders gegen eine missbräuchliche Verwendung zu sichern. Weiters ist es möglich, in Abhängigkeit vom Kommunikationspartner nur eine bestimmte Untergruppe an Datenelementen für eine Übermittlung freizugeben, ohne dass dieser Kommunikationspartner Informationen über andere sensible Daten erhält.

Ein "Kommunikationspfad" wird im Zusammenhang mit der gegenständlichen Beschreibung durch festgelegte Endpunkte, durch das verwendete Übermittlungsprotokoll, durch eine festgelegte Verschlüsselung und gegebenenfalls durch eine oder mehrere festgelegte Zwischenstationen definiert. Zwei Kommunikationspfade sind dann unterschiedlich, wenn einer oder beide Endpunkte der Kommunikationspfad sich unterscheiden und/oder wenn sich das Vorhandensein und gegebenenfalls die Anzahl an festgelegten Zwischenstationen zwischen den Kommunikationspfaden unterscheiden und/oder wenn bei den Kommunikationspfaden unterschiedliche Übermittlungsprotokolle verwendet werden und/oder wenn bei den Kommunikationspfaden unterschiedliche Verschlüsselungen verwendet werden.

Im Allgemeinen sind erfindungsgemäß ein erster Kommunikationspfad und ein zweiter Kommunikationspfad definiert, die sich voneinander unterscheiden. Wie dies einem Fachmann klar ist können jedoch auch mehrere erste und/oder mehrere zweite Kommunikationspfade definiert sein. Wesentlich ist die getrennte Übermittlung des Anzeigeschemas über den (die) ersten Kommunikationspfad(e) und der Datenelemente über den (die) davon unterschiedlichen zweiten Kommunikationspfad(e).

Das dem Anzeigeschema der Schirmansicht zumindest teilweise entsprechende Anzeigeschema kann entweder am Beginn jeder Kommunikationssitzung an das Kommunikationsgerät übermittelt und dann während der Kommunikationssitzung unverändert beibehalten werden. Andererseits kann das Anzeigeschema in bestimmten regelmäßigen oder unregelmäßigen Abständen neu übermittelt werden, um die Anzeige der fernen Instanz an Änderungen bei der Schirmansicht anzupassen.

Im Zusammenhang mit der gegenständlichen Anmeldung wird als "Schirmansicht" das Original einer Bildschirmdarstellung verstanden, die auf einer Anzeige einer zugehörigen Computereinheit während des Betriebs dargestellt wird (einschließlich aller darin enthaltenen Daten- und Bildelementen).

Als "ferne Instanz" dieser Schirmansicht wird eine Bildschirmdarstellung bezeichnet, die, für einen Kommunikationspartner einsehbar, an einem fernen Gerät (das hierin allgemein als "Kommunikationsgerät" bezeichnet wird) angezeigt wird, und die der Schirmansicht zumindest teilweise entspricht bzw. als ferne Kopie der Schirmansicht angesehen werden kann. Der Ausdruck "zumindest teilweise entspricht" kann insbesondere bedeuten, dass zumindest Teile der Bild- und/oder Datenelemente in der fernen Instanz gegenüber der Schirmansicht ausgeblendet, verändert oder ersetzt sind.

Eine Vorrichtung oder Instanz wird im Zusammenhang mit der gegenständlichen Anmeldung als "fern" angesehen, wenn sie mit der Computereinheit, an der die Schirmansicht dargestellt wird, über ein lokales Netzwerk oder ein Weitverkehrsnetzwerk, insbesondere das Internet, verbunden ist.

Als Anzeigeschema wird im Zusammenhang mit der gegenständlichen Beschreibung eine Definition der Anordnung von Daten- und Bildelementen auf einer Schirmansicht bezeichnet. Mithilfe des Anzeigeschemas, der darin angeführten Bildelemente und den Werten der Datenelemente kann eine ferne Instanz der ursprünglichen Schirmansicht erstellt werden.

Als "Datenelement" werden allgemein Elemente bezeichnet, denen ein bestimmter statischer oder variabler Wert zugeordnet werden kann. Als Datenelement kann beispielsweise die Ausgabe eines bestimmten Sensors (z.B. eine Temperatur, ein Druck, eine Beschleunigung, eine Geschwindigkeit, etc.) definiert sein, wobei der Wert dieses Datenelements immer dem aktuellen Messwert dieses Sensors (also z.B. einem in C°, Pa, m/s², m/2, etc. angegebenen Wert) entspricht.

Als "Bildelement" werden alle bildhaft dargestellten Teile einer Schirmansicht bezeichnet, wobei die Bildelemente, je nach Definition, entweder ein Teil des Anzeigeschemas sein können, und mit diesem übermittelt werden, oder aber, wenn das Bildelement eine bildhafte Darstellung von Daten repräsentiert, auch als Datenelement definiert sein können.

Als Kommunikationsgerät kann im Allgemeinen jegliche Vorrichtung angesehen werden, die eine Darstellung der fernen Instanz der Schirmansicht erlaubt. Insbesondere kann als Kommunikationsgerät ein herkömmlicher Personalcomputer verwendet werden, der mit dem Internet verbunden ist.

Gemäß dem erfindungsgemäßen Verfahrens erfolgt die Kommunikation gemäß dem zweiten Kommunikationsweg über einen Broker und wird gemäß einem Protokoll ausgeführt, das gemäß einem Subscriber/Publisher-Modell funktioniert. Dadurch lässt sich einerseits die (sensible) Datenübertragung besonders sicher gestalten, andererseits kann die Netzwerkverbindung, über die die Datenübertragung erfolgt, vollständig gegen Incoming Traffic und Webdienste gesperrt werden, was Hackerangriffe vereitelt.

Unter der Bezeichnung "Protokoll, das gemäß einem Subscriber/Publisher-Modell funktioniert" werden Kommunikationsprotokolle verstanden, bei denen die Datenübermittlung von einem Sender (der als "Publisher" bezeichnet wird) zu einem oder mehreren Empfänger(n) (die als "Subscriber" bezeichnet werden), über einen sogenannten "Broker" erfolgt. Das bekannteste Beispiel für ein solches Protokoll ist das MQTT-Protokoll. Die Daten werden dabei von dem Publisher an den Broker übermittelt, der diese Daten gemäß den Protokollspezifikationen in einem Kanal ablegt. Ein Subscriber dieses Kanals kann die Daten dann vom Broker abrufen, ohne dass jemals eine direkte Verbindung zwischen Publisher und Subscriber aufgebaut werden muss. Indem Sender und Empfänger wechselnd als Publisher und/oder Subscriber auftreten, können auch zweiseitige Kommunikationen über dieses Protokoll realisiert werden.

Um zu verhindern, dass die Daten von einem nicht berechtigtem Subscriber, der Kenntnisse über die Kanalinformationen erhalten hat, abgerufen werden können, können diese Daten vom Publisher zuvor für den berechtigten Subscriber verschlüsselt werden, beispielsweise über ein herkömmliches asymmetrisches Verschlüsselungsverfahren. Die regelmäßigen oder unregelmäßigen Intervalle, in denen vom Publisher und/oder vom Subscriber auf den Kanal zugegriffen wird, können gemäß den jeweiligen Erfordernissen definiert werden.

Wesentlich bei einem Protokoll, das gemäß einem Subscriber/Publisher-Modell funktioniert, ist, dass jede Verbindung immer von "innen", das heißt von der sicheren Umgebung, nach "außen", das heißt zu der potentiell unsicheren Verbindung, eingeleitet wird. Es ist somit nicht erforderlich, einen Zugriff auf eine sichere Umgebung von außen her zuzulassen, wie dies etwa bei Webdiensten mithilfe offener Ports erforderlich ist. Dadurch lassen sich sehr sichere Firewallrichtlinien umsetzten, bei denen alle Ports geschlossen sind. Dennoch ist die Kommunikation über das Protokoll, das gemäß einem Subscriber/Publisher-Modell funktioniert, weiterhin möglich.

In vorteilhafter Weise kann die Schirmansicht eine Anzeige einer Computereinheit sein, die zur Steuerung einer Anlage eines Anwenders dient. Vorrichtungen zur Steuerung von Anlagen erfordern hohe Sicherheitsvorkehrungen, die mit der gegenständlichen Erfindung erreicht und verbessert werden können. Die Anlage kann beispielsweise ein Teststand oder eine Fabrik sein.

Zumindest ein Datenelement kann in einer vorteilhaften Ausführungsform Daten der Telemetrie-Ebene, wie etwa Messdaten von Messsensoren der Anlage, repräsentieren. Der Benutzer kann selbst definieren, wer welche Datenwerte der Anlage im Zuge einer Kommunikationssitzung zu sehen bekommt, und in welcher Form (d.h. mit welchem Anzeigeschema).

Um die Sicherheit weiter zu erhöhen kann die Datenübertragung gemäß dem zweiten Kommunikationsweg in einer weiteren vorteilhaften Ausführungsform verschlüsselt erfolgen.

Bei dem erfindungsgemäßen System der eingangs genannten Art übermittelt die Computereinheit ein dem Anzeigeschema der Schirmansicht zumindest teilweise entsprechendes Anzeigeschema zumindest ein erstes Mal über den ersten Kommunikationspfad an das Kommunikationsgerät und die Werte von zumindest einem der Datenelemente werden während einer Kommunikationssitzung über den zweiten Kommunikationspfad an das Kommunikationsgerät übermittelt, wodurch sich das erfindungsgemäße Verfahren vorteilhaft ausführen lässt.

Die Computereinheit greift dabei auf den ersten Kommunikationspfad über eine Netzwerkschnittstelle und auf den zweiten Kommunikationspfad über einen Sicherheitscontroller zu. Dadurch kann der Sicherheitscontroller mit besonderen Sicherheitsmerkmalen ausgestattet werden, die auch eine Abgrenzung der Hardware des Anlagenbereichs gegenüber weniger sicheren Hardwarebereichen ermöglicht.

Ein besonders vorteilhaft verwendbarer Sicherheitscontroller ist in der Druckschrift WO2015/155274A1 offenbart, die auf den gleichen Anmelder zurückgeht, wie die gegenständliche Anmeldung. Es wird davon ausgegangen, dass der Fachmann ausführliche Kenntnisse von dieser Druckschrift hat.

Der Sicherheitscontroller führt dabei die Kommunikation über den zweiten Kommunikationspfad gemäß einem Protokoll aus, das gemäß einem Subscriber/Publisher-Modellfunktioniert.

In vorteilhafter Weise kann der zweite Kommunikationspfad von dem Sicherheitscontroller über einen Broker führen. Der Broker kann vom Anbieter der Kommunikationslösung bereitgestellt werden, wobei der Anbieter dabei die Kontrolle über die Sicherheitsfunktionalität sicherstellen kann, aber dennoch keinen Zugriff auf die kommunizierten Daten erhält.

In vorteilhafter Weise kann der Sicherheitscontroller zu diesem Zweck eine Ver- und Entschlüsselungseinheit aufweisen.

In einer weiteren vorteilhaften Ausführungsform kann die Vorrichtung mehrere Instanzen der Datenelemente erstellen, die in Abhängigkeit der Berechtigungen eines Kommunikationsgeräts selektiv an dieses Kommunikationsgerät übermittelt werden. Dadurch lassen sich in Abhängigkeit der Berechtigung, die einem bestimmten Kommunikationsgerät zugeordnet sind, die Daten in einer unterschiedlichen Genauigkeit mitteilen. Wenn in einer Kommunikationssitzung mehrere ferne Instanzen der Schirmansicht gleichzeitig an mehreren Kommunikationsgeräten angezeigt werden sollen, wird jeweils nur die Information dargestellt, die für den jeweiligen Kommunikationspartner definiert ist. Praktisch kann die Bereitstellung der unterschiedlichen Instanzen der Datenelemente über eigene Kanäle in dem Broker, der das Subscriber/Publisher-Modell verwaltet, erfolgen. Die unterschiedlichen Instanzen können die Daten beispielsweise in voller Auflösung, in reduzierter Auflösung, oder nur als binäre Information (z.B.: "Wert befindet sich im gültigen Bereich - Ja/Nein") darstellen. Besitzt ein Kommunikationspartner keine Berechtigung für ein Datenelement, dann wird für dieses Datenelement in der Instanz kein Wert angezeigt. Auch bildhafte Darstellungen können dabei als Datenelemente definiert werden, wobei die jeweilige Berechtigung definiert, ob und welche bildhafte Darstellung in der fernen Instanz des jeweiligen Kommunikationspartners angezeigt wird.

Das eingangs genannte erfindungsgemäße Softwareprodukt befähigt das Kommunikationsgerät in vorteilhafter Weise zur Ausführung zumindest der folgenden Schritte: Empfangen eines einem Anzeigeschema der Schirmansicht zumindest teilweise entsprechenden Anzeigeschemas über den ersten Kommunikationspfad; während einer Kommunikationssitzung Empfangen von Werten von Datenelementen über den zweiten Kommunikationspfad; Kombinieren des empfangenen Anzeigeschemas und der empfangenen Werte der Datenelemente zu der fernen Instanz der Schirmansicht; und Anzeigen der fernen Instanz. Das Softwareprodukt kann auf zahlreichen Kommunikationsgeräten unterschiedlicher Kommunikationspartner verwendet werden, wobei der Benutzer der Computereinheit, die die Schirmansicht darstellt, genau definieren kann, was von dem Softwareprodukt als ferne Instanz erzeugt und angezeigt wird. Das Anzeigeschema kann auch statisch definiert und vorgegeben sein, wobei über den ersten Kommunikationspfad lediglich die Informationen über das zu verwendende Anzeigeschema übermittelt werden. Das Anzeigeschema kann dabei auch im Softwareprodukt definiert sein.

In vorteilhafter Weise kann das Softwareprodukt das Kommunikationsgerät weiters zur Übermittlung von Datenwerten an die ferne Computereinheit über den zweiten Kommunikationspfad befähigen. Dadurch lässt sich eine Art "Rückkanal" bewerkstelligen, über den der Benutzer des Kommunikationsgeräts Bedieneingriffe an der Computereinheit, an der die Schirmansicht dargestellt wird, vornehmen kann, etwa um Parameteränderungen und Steuervorgänge auszuführen. Die Berechtigung dazu kann gegebenenfalls vom Benutzer der Computereinheit für bestimmte Datenelemente freigegeben, gesperrt oder innerhalb bestimmter Grenzwerte freigegen werden.

Dabei können die Datenwerte in vorteilhafter Weise von einem Benutzer über eine Benutzerschnittstelle des Kommunikationsgeräts eingegeben werden. Die ferne Instanz kann dadurch (im Rahmen der jeweiligen Berechtigungen) vom Benutzer in einer ähnlichen Weise verwendet werden, wie dies an der Computereinheit, die die Schirmansicht anzeigt, erfolgen würde.

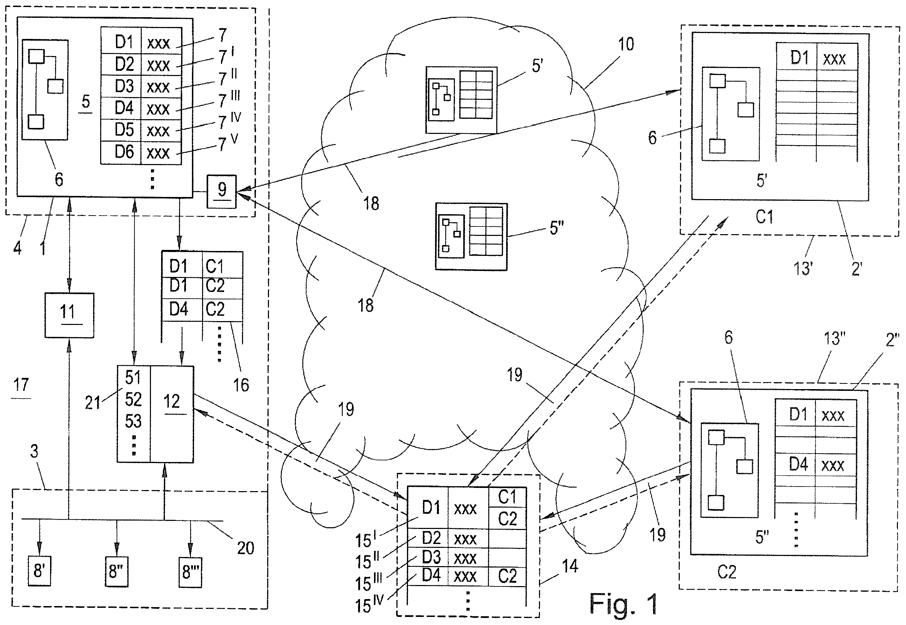

Die gegenständliche Erfindung wird nachfolgend unter Bezugnahme auf die Figur 1 näher erläutert, die beispielhaft, schematisch und nicht einschränkend vorteilhafte Ausgestaltungen der Erfindung zeigen. Dabei zeigt
Fig.1 eine schematische Übersicht über die an dem erfindungsgemäßen Verfahren beteiligten Einheiten und Kommunikationspfade.

Der in Fig. 1 auf der linken Seite durch eine Strichlinie abgetrennte Bereich ist einem Anwender 17 zugeordnet, wobei der Anwender eine Anlage 3 mittels einer Computereinheit 4, die als Steuereinheit für die Anlage 3 dient, betreibt. Die Anlage 3 kann beispielsweise ein Prüfstand, eine Maschine oder eine sonstige industrielle Anlage sein, die über die Computereinheit 4 bedient, parametrisiert und/oder überwacht werden kann.

Die Anlage 3 weist eine Vielzahl an Anlagenkomponenten 8^{I}, 8^{II}, 8^{III} auf, wobei die Anlagenkomponenten beispielsweise Stelleinrichtungen, Messeinheiten oder allgemein jegliche Komponenten darstellen können, die Daten generieren und an die Computereinheit 4 weiterleiten, und/oder Daten von der Computereinheit 4 erhalten können. Die Kommunikation zwischen der Computereinheit 4 und den Anlagekomponenten 8 kann beispielsweise über eine Busverbindung 20 erfolgen.

Die Computereinheit 4 weist eine Schirmansicht 1 auf, auf der eine Vielzahl an Datenelementen D1, D2, etc., gemäß einem definierten Anzeigeschema 5 dargestellt werden. Das Anzeigeschema 5 kann eine beliebige Gestaltung aufweisen, und beispielsweise dynamische oder statische Bildelemente 6 aufweisen, wobei das Anzeigeschema 5 jedem der Datenelemente D1, D2, eine bestimmte Anzeigeposition 7^{I} bis 7^{V} zuordnet.

Die Datenelemente D1, D2, etc. können beliebige darstellbare Werte repräsentieren, die für die Computereinheit 4 oder die Anlage 3 von Interesse sind, beispielsweise änderbare oder vorgegebene Parameterdaten, Simulationsdaten und/oder Daten der Telemetrie-Ebene, wie etwa Messdaten von Messsensoren der Anlage, etc.

Die Computereinheit 4 weist eine Netzwerkschnittstelle 9 auf, über die eine Kommunikation über ein offenes Netzwerk10 erfolgen kann. Das offene Netzwerk 10 ist vorzugsweise das Internet, es kann jedoch auch ein anderes Netzwerk sein, dass beispielsweise lediglich einem definierten Kreis an Kommunikationspartnern offen steht, sofern die Kommunikation über und der Zugriff auf dieses Netzwerk nicht im ausschließlichen Einflussbereich eines der Kommunikationspartner liegt. Die Netzwerkschnittstelle 9 weist im Allgemeinen Sicherheitseinrichtungen, wie etwa eine Firewallstruktur, auf, die einen unerlaubten Datenzugriff durch Dritte über das offene Netzwerk 10 verhindern.

Die Kommunikation zwischen der Computereinheit 4 und der den Anlagekomponenten 8 kann beispielsweise über eine hardwarenahe Schnittstelle 11 erfolgen, die ebenfalls Sicherheitsmechanismen aufweisen kann, um einen missbräuchlichen Zugriff auf die Anlagenkomponenten 8 zu verhindern.

Zusätzlich ist im Bereich des Anwenders 17 ein Sicherheitscontroller 12 vorgesehen, dessen Funktionsweise untenstehend eingehender erläutert wird. Der Sicherheitscontroller 12 weist Datenschnittstellen zu den Anlagenkomponenten 8 und zur Computereinheit 4 auf, und er verfügt auch über eine Schnittstelle zum offenen Netzwerk 10, wobei diese Schnittstelle eine eingehende Kommunikation gegebenenfalls vollständig blockieren kann (beispielsweise durch Schließen bzw. Deaktivieren aller Ports).

Aus Sicht des Anwenders 17 kann ein Interesse daran bestehen, den Inhalt der Schirmansicht 1 an einem oder mehreren Kommunikationsgeräten 13^{I}, 13^{II} als eine fernen Instanz 2 der Schirmansicht 1 in Echtzeit sichtbar zu machen, beispielsweise um mit einem Anbieter oder einem Servicetechniker Probleme oder Fehlfunktionen einer der Anlagenkomponenten 8 zu besprechen und zu beheben.

Dazu stehen grundsätzlich zahlreiche Online-Collaboration-Tools zur Verfügung, mit denen es beispielsweise möglich ist, den eigenen Bildschirminhalt in Echtzeit zu "Teilen", wobei eine Bilddarstellung der Schirmansicht erstellt, über das offene Netzwerk 10 an das Kommunikationsgerät 13 übermittelt, und diese Bilddarstellung auf einem Bildschirm des Kommunikationsgeräts 13 als ferne Instanz 2 animiert oder statisch dargestellt wird.

Diese Online-Collaboration-Tools haben jedoch den Nachteil, dass an alle Kommunikationsgeräte 13 immer der gesamte Bildschirminhalt übermittelt wird, auch wenn dieser Bildschirminhalt sensible Daten anzeigt, die nicht für diesen Kommunikationspartner bestimmt sind. Darüber hinaus ist es für das Kommunikationsgerät nicht möglich, die Daten weiter auszuwerten, da die Bilddarstellung eine solche Datenauswertung nicht erlaubt.

In Fig. 1 sind zwei unterschiedliche Kommunikationsgeräte 13^{I} und 13" beispielhaft dargestellt, auf deren Bildschirmen jeweils eine ferne Instanz 2^{I}, 2^{II} der Schirmansicht 1 dargestellt wird. Die fernen Instanzen 2^{I}, 2^{II} basieren jeweils auf einem dynamischen oder statischen Anzeigeschema 5^{I}, 5^{II}, das, wie die Schirmansicht 1 auch, dynamische oder statische Bildelemente 6 aufweisen kann und jedem Datenelement D1, D2, etc., eine bestimmte Anzeigeposition 7^{I} bis 7^{V} zuordnet.

Die Anzeigeschemata 5^{I}, 5^{II} der fernen Instanzen 2^{I}, 2^{II} können mit dem Anzeigeschema 5 der Schirmansicht 1 übereinstimmen, sie können sich jedoch auch von dieser unterscheiden. Die Anzeigeschemata 5^{I}, 5^{II} der fernen Instanzen 2^{I}, 2^{II} können weiters in der Hard- oder Software der Kommunikationsgeräte 13^{I} und 13" definiert sein, oder sie können am Beginn oder während einer Kommunikationssitzung von der Computereinheit 4 über einen ersten Kommunikationspfad 18 zum Kommunikationsgerät 13^{I} und 13^{II} übermittelt und von der dortigen Hard- bzw. Software zur Anzeige als ferne Instanz 2^{I}, 2^{II} verarbeitet werden. Je nach Erfordernis kann ein neues Anzeigeschema 5^{I}, 5^{II} jedes Mal übermittelt werden, wenn sich die Schirmansicht 1 ändert, oder es kann in regelmäßigen Abständen übermittelt werden, um beispielsweise die fernen Instanzen 2^{I}, 2^{II} laufend und in Echtzeit gemäß der aktuellen Schirmansicht 1 anzupassen.

Weiters ist es möglich, für unterschiedliche Kommunikationsgeräte 13^{I} und 13^{II} unterschiedliche Anzeigeschemata 5^{I}, 5^{II} bereitzustellen, etwa wenn eines der Kommunikationsgeräte 13^{I} und 13^{II} nur eingeschränkte Informationen über die Bildanzeige 1 erhalten soll, wobei beispielsweise bestimmte Bildelemente 6 oder bestimmte Anzeigepositionen 7 in der fernen Instanz 2^{I}, 2^{II} nicht aufscheinen sollen.

Die Anzeigeschemata 5^{I}, 5^{II} enthalten jedoch keinerlei Informationen über den aktuellen Wert der Datenelemente D1, D2, etc., sondern definieren lediglich deren Anzeigeposition und - form. Die Anzeigeschema 5^{I}, 5^{II} stellen somit lediglich eine "leere Hülle" dar, die noch durch die aktuellen Werte der Datenelemente D1, D2, etc., ergänzt werden muss.

Die Übermittlung des Anzeigeschemas 5^{I}, 5^{II} von der Computereinheit 4 an die Kommunikationsgeräte 13 erfolgt über einen ersten Kommunikationspfad 18, wobei für diesen ersten Kommunikationspfad 18 beispielsweise eine herkömmliche Internetverbindung verwendet werden kann, dies entspricht in Fig. 1 einer Verbindung von der Computereinheit 4, über die Netzwerkschnittstelle 9 und über das offene Netzwerk 10 zu den Kommunikationsgeräten 13.

Um dem Anwender 17 die Möglichkeit zu geben, genau festzulegen, welche Datenelemente für welches Kommunikationsgerät 13^{I} und 13^{II} in welcher Form anzeigbar sein sollen, und um die Werte dieser Datenelemente gegen einen unerlaubten Zugriff durch Dritte zu schützen, wird für die Kommunikation der Werte der Datenelemente ein eigener Übertragungsweg gewählt, der sich von dem Übertragungsweg, mit dem die Anzeigeschemata 5^{I}, 5^{II} übermittelt werden, unterscheidet.

In Fig. 1 werden die Werte der Datenelemente D1, D2, etc., von dem Sicherheitscontroller 12 an einen Broker 14 übermittelt. Dabei nutzt der Sicherheitscontroller 12 ein Protokoll, das gemäß einem Subscriber/Publisher-Modell funktioniert. Solche Protokolle, zum Beispiel gemäß der MQTT-Spezifikation, erlauben dem Sicherheitscontroller 12 die Umsetzung von Firewall-Richtlinien, die Incomming Traffic vollständig sperren. Eine Manipulation des Systems über Webdienste und ein Aufbau einer End-zu-End-Verbindung bis zur Computereinheit 4 oder bis zu den Anlagenkomponenten 8 kann dadurch ausgeschlossen werden.

Bei Protokollen, die gemäß einem Subscriber/Publisher-Modell funktionieren, wird bekanntermaßen keine direkte End-zu-End-Verbindung hergestellt, sondern die Kommunikation wird immer über den zwischengeschalteten Broker 14 vermittelt. Allgemein erhält der Broker 14 Daten von einem "Publisher", und stellt sie für einen oder mehrere "Subscriber" bereit. Dabei wird auch eine zertifikatsgestützte Identifikation von Publisher und/oder Subscriber unterstützt, die im Zusammenhang mit der gegenständlichen Erfindung vorteilhaft verwendet werden kann. Jeder Endpunkt (d.h. im in Fig. 1 dargestellten Fall der Sicherheitscontroller 12 bzw. die Netzwerkschnittstellen der Kommunikationsgeräte 13^{I} und 13^{II}) "öffnet" die Kommunikation zum Broker 14 von sich aus, und diese wird nicht "von außen" eingeleitet. Wenn ein Endpunkt als Publisher agiert, werden Daten von diesem Endpunkt zum Broker 14 übermittelt, und wenn ein Endpunkt als Subscriber agiert, werden Daten vom Broker 14 zu dem Endpunkt abgerufen. Da sowohl die Kommunikationsgeräte 13, als auch der Sicherheitscontroller 12 jeweils sowohl als Subscriber, als auch als Publisher agieren können, ist es auch möglich, Daten in beiden Richtungen auszutauschen, ohne dass dazu ein potentiell angreifbarer Webdienst eingerichtet werden muss.

Datenkommunikationen von einem Publisher zum Broker sind in Fig. 1 als durchgängige Pfeile dargestellt, Subscribervorgänge, bei denen Daten von einem Subscriber vom Broker 14 aus einem Kanal 15 abgerufen werden, sind als strichlierte Pfeile dargestellt.

Der Broker 14 ordnet die Datenelemente D jeweils einem Kanal 15 zu und stellt die von einem Publisher erhaltenen Werte für diese Datenelemente D in diesem Kanal für einen Abruf durch einen oder mehrere Subscriber bereit. In Fig. 1 sind vier Kanäle 15^{I} bis 15^{IV}, die jeweils einem Datenelement D1, D2, D3, D4 zugeordnet sind, beispielhaft dargestellt.

Damit nicht jeder, der den Broker 14 und die entsprechenden Kanäle 15 kennt, die Werte der in diesem Kanal gespeicherten Daten D abrufen kann, werden diese vom Sicherheitscontroller 12 mit einem für jedes der Daten D1, D2, etc., spezifischen Schlüssel S1, S2, etc., verschlüsselt. Sie können somit weder von Dritten, noch vom Broker 14 selber ausgelesen werden. Dazu verfügt der Sicherheitscontroller 12 über eine Ver- und Entschlüsselungseinheit 21, die vorzugsweise hardwarecodiert auf einem Chip implementiert sein kann, um einen unerlaubten Zugriff und eine Manipulation durch Dritte zu verhindern.

Eine Entschlüsselung der in den Kanälen abgespeicherten Daten soll lediglich den Kommunikationsgeräten 13 möglich sein, die dazu eine Berechtigung aufweisen. Diese Berechtigungen können vom Anwender 17 beliebig vergeben werden, wobei die Berechtigungen beispielsweise in Form einer Zuordnungstabelle 16 dem Sicherheitscontroller 12 kommuniziert wird. Diese Zuordnungstabelle 16 ordnet Datenelemente D einem oder mehreren Kommunikationsgeräten 13 zu, das bzw. die berechtigt ist bzw. sind, dieses Datenelement D anzuzeigen. Die spezifische Zuordnung kann beispielsweise über einen asymmetrischen Schlüssel C1, C2 erfolgen, wobei jeder asymmetrische Schlüssel C einem bestimmten Kommunikationsgerät 13 zugeordnet ist.

Um beispielsweise das Datenelement D1 für das Kommunikationsgerät 13^{II}, dem der asymmetrische Schlüssel C2 zugeordnet ist, freizugeben, verschlüsselt der Sicherheitscontroller 12 den Symmetrischen Schlüssel S1, mit dem das Datenelement D1 verschlüsselt wurde, und übermittelt diesen Schlüssel S1 verschlüsselt an das Kommunikationsgerät 13^{II}, wobei diese Übermittlung vorzugswese auch über den Broker 14 mithilfe des MQTT-Protokolls abgewickelt wird. Das Kommunikationsgerät 13^{II} kann nun den symmetrischen Schlüssel S1 mithilfe seines asymmetrischen Schlüssels C2 entschlüsseln, und somit die dem Datenelement D1 zugeordneten Werte, die vom Kanal 15^{I} in verschlüsselter Form abgerufen wurden, entschlüsseln.

Von der auf dem Kommunikationsgerät 13 laufenden Hard- bzw. Software werden die von diesem Kommunikationsgerät entschlüsselbaren Werte dann an der entsprechenden Stelle in das Anzeigeschema eingefügt, und dadurch die ferne Instanz 2^{I}, 2^{II}, der Schirmansicht spezifisch für das jeweilige Kommunikationsgerät 13 aktualisiert.

In Fig. 1, in der die Anzahl an Datenelementen D, Schlüsseln S, C und Kommunikationsgeräten 13 verglichen mit der der möglichen Anzahl der Übersichtlichkeit halber stark eingeschränkt wurde, kann beispielsweise das erste Kommunikationsgerät 13^{I} lediglich den Wert des ersten Datenelements D1 anzeigen. Das zweite Kommunikationsgerät 13^{II} kann hingegen die Werte der Datenelement D1 und D4 anzeigen. Alle anderen Werte werden in der fernen Instanz 2^{II} nicht dargestellt.

In einem Praxisbeispiel könnte der Broker 14 beispielsweise von einem Hersteller bestimmter Anlagenkomponenten 8 bereitgestellt werden. (Dieser Hersteller kann auch den Sicherheitscontroller 12 bereitstellen). Der Hersteller kann dadurch seinem Kunden (d.h. dem Anwender 17) eine Möglichkeit bieten, selbst genau festzulegen, wer welche Daten der Anlagekomponenten 8 sehen soll. Auch der Hersteller selber, der den Broker 14 betreibt, kann nicht auf diese Daten zugreifen, es sei denn, er wird vom Anwender 17 dazu berechtigt. Die Anlagenkomponenten können beispielsweise Sensoren sein, und die Werte der Datenelemente D können demgemäß Telemetriedaten dieser Sensoren sein.

Das erfindungsgemäße System lässt sich, beispielsweise für eine Fernwartung, auch in der umgekehrten Richtung verwenden, indem nämlich ein Kommunikationsgerät 13 als Publisher Daten in einen Kanal einspeist, und diese Daten vom Sicherheitscontroller 12, der dann als Subscriber auftritt, ausgelesen werden. Der Sicherheitscontroller 12 kann dann, je nach Anwendungsfall, die Daten an die Computereinheit 4 und/oder gegebenenfalls direkt an die Analgenkomponenten 8 weiterleiten.

Die Werte der Datenelemente D können entweder in ihrer vollständigen Form über den Broker 14 den berechtigten Kommunikationsgeräten bereitgestellt werden, oder sie können gemäß den Vorgaben des Anwenders 17 in einer eingeschränkten Form bereitgestellt werden. So kann es beispielsweise erforderlich oder gewünscht sein, bei einem Kommunikationsgerät anzuzeigen, ob der Wert eines Datenelements D sich innerhalb bestimmter Parameter befindet, es kann jedoch gleichzeitig unerwünscht sein, dass das Kommunikationsgerät 13 den exakten Wert anzeigt. In diesem Fall kann beispielsweise aus dem aktuellen Wert des entsprechenden Datenelements D anhand der Parameterbedingung ein binärer Wert (true/false) erstellt werden, der über einen eigenen Kanal 15 an das Kommunikationsgerät 13 übermittelt wird. Auf der fernen Instanz 2 des Kommunikationsgeräts kann dann anstelle des eigentlichen Werts lediglich die Information über die Einhaltung der jeweiligen Parameter angezeigt werden. Die Anzeige kann auch in einer animierten oder codierten Form erfolgen, beispielsweise als Farbkodierung (z.B. true: Grün, false: Rot).

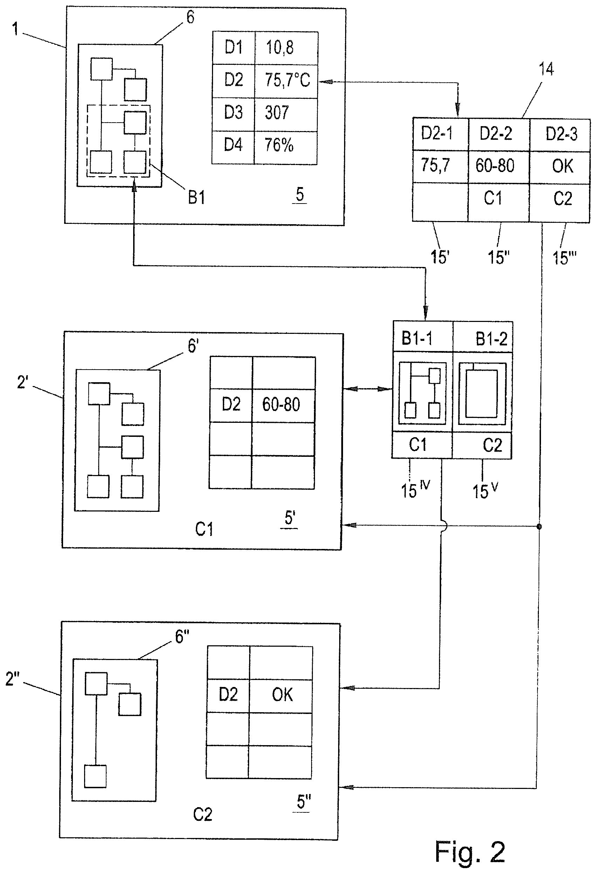

Fig. 2 veranschaulicht beispielhaft, wie unterschiedliche Berechtigungen für eine gewünschte unterschiedliche Darstellung in den einzelnen Instanzen verwendet werden können.

Die Schirmansicht 1 der Fig. 2 weist ein Bildelement 6 und mehrere Anzeigepositionen für die Werte der Datenelemente D1 bis D4 auf, die gemäß einem Anzeigeschema 5 definiert sind. D1 zeigt gerade einen Wert von 10,8 an, D2 zeigt 75,7 C° an, D3 einen Wert von 307 und D4 einen Wert von 76 % (diese Werte sind rein beispielhaft und dienen lediglich der Veranschaulichung).

Das in der Schirmansicht 1 dargestellte Bildelement 6, das beispielsweise eine Simulationsstruktur oder ein Flussdiagramm darstellen könnte, weist einen Bereich auf, der in diesem Fall nicht als Teil des Anzeigenschemas 5 definiert ist, sondern als Bilddatenelement B1, das eine spezifische Art eines Datenelements darstellt, und daher, wie die anderen Datenelemente D über einen zweiten Kommunikationspfad an die Kommunikationsgeräte übermittelt wird.

Der Teil des Bildelements 6, der im Anzeigeschema 5 definiert ist, wird dann in der jeweiligen fernen Instanz 2^{I}, 2^{II} mit dem aktuell übermittelten Bilddatenelement B1 kombiniert, um in den jeweiligen fernen Instanzen 2^{I}, 2^{II} unterschiedliche Bildelemente 6^{I}, 6^{II} anzeigen zu können. Je nach Art des übermittelten Bilddatenelements B1 kann somit beispielsweise an einer fernen Instanz 2^{I} entweder das Bildelement 6^{I} mit allen Details und/oder in einer dynamischen Darstellung angezeigt werden, oder es kann in einer anderen fernen Instanz 2^{II} das Bildelement 6^{II} in einer vereinfachten, weniger detaillierten und/oder statischen Form angezeigt werden. Für eine Online-Besprechung kann beispielsweise der Anwender den Wunsch haben, unterschiedlichen Gesprächspartnern seine aktuelle Schirmansicht 1 in einer jeweils unterschiedlichen Detailliertheit zu zeigen. Beispielsweise soll die ferne Instanz 2^{I} eines ersten Kommunikationspartners einen Wert für das Datenelement D2 in einer reduzierten Auflösung anzeigen, und das Bildelement 6 soll in seiner vollen Detailliertheit und gegebenenfalls dynamisch anzeigt werden. Die ferne Instanz 2^{II} eines zweiten Kommunikationspartners soll für das Datenelement D2 hingegen lediglich eine Statusangabe (z.B. "OK" oder "Fehler") anzeigen, und das Bildelement 6 soll dort nur in reduzierter Form anzeigt werden. (Auf eine detaillierte Beschreibung der Darstellung der anderen Datenelemente D1, D3 und D4 wurde der Übersichtlichkeit halber verzichtet, sie kann jedoch analog erfolgen).

Für das Datenelement D2 werden im Broker 14 drei unterschiedliche Kanäle 15^{I}, 15^{II} und 15^{III} definiert, in denen jeweils ein Wert für das Datenelement 2 in einer unterschiedlichen Detailliertheit bereitgestellt wird. Der erste Kanal 15^{I} stellt den exakten Wert bereit (D2-1), der zweite Kanal 15^{II} stellt den Wert in einer geringeren Auflösung bereit (D2-2) und der dritte Kanal 15^{III} stellt lediglich eine binäre Information über den Status des Wertes bereit (D2-3).

Ebenso werden für das Bilddatenelement B1ein Kanal 15^{IV} für das Bilddatenelement B1-1 in seiner detaillierten Form und ein zweiter Kanal 15^{V} für das Bilddatenelement B1-2 in seiner vereinfachten Form bereitgestellt.

Die Bilddatenelemente B können über den selben Broker 14 bereitgestellt werden, wie die Datenelemente D, es können jedoch auch mehrere Broker 14 definiert sein, was mehrere zweite Kommunikationspfade definieren würde.

Durch Setzen der Berechtigungen (die, wie oben beschrieben, über Schlüssel C1, C2 erfolgen kann) kann der Anwender genau definieren, welche Inhalte auf jeder fernen Instanz in welcher Form dargestellt werden, wobei die Darstellung der Inhalte in den fernen Instanzen 2^{I}, 2^{II} in Echtzeit an die Darstellung der Schirmansicht 1 angeglichen werden.

### Bezugszeichen:

Schirmansicht (1)
fernen Instanz (2^{I}, 2^{II})
Anlage 3
Computereinheit 4
Anzeigeschema 5
Bildelement 6
Anzeigeposition 7
Anlagekomponenten 8
Netzwerkschnittstelle 9
offenes Netzwerk 10
hardwarenahe Schnittstelle 11
Sicherheitscontroller 12
Kommunikationsgerät 13
Broker 14
Kanäle 15
Zuordnungstabelle 16
Anwender 17
erster Kommunikationspfad 18
zweiter Kommunikationspfad 19
Busverbindung 20
Ver- und Entschlüsselungseinheit 21

## Patentansprüche

1. Verfahren zum Erzeugen und Aktualisieren zumindest einer fernen Instanz (2) einer Schirmansicht (1) bei zumindest einem Kommunikationsgerät (13) während einer Kommunikationssitzung, mittels eines Systems bestehend aus einer Computereinheit (4), zumindest einem Kommunikationsgerät (13), einen ersten Kommunikationspfad (18) zwischen der Computereinheit (4) und dem zumindest einen Kommunikationsgerät (13), einem zweiten Kommunikationspfad (19) zwischen der Computereinheit (4) und dem zumindest einem Kommunikationsgerät (13), einem Sicherheitscontroller (12) und einem Broker (14), wobei die ferne Instanz (2) einer Schirmansicht (1) eine Bildschirmdarstellung bezeichnet, die für einen Kommunikationspartner einsehbar ist, an dem Kommunikationsgerät (13) als fernem Gerät angezeigt wird, und der Schirmansicht (1) zumindest teilweise entspricht, wobei die Schirmansicht (1) während der Kommunikationssitzung an einer Computereinheit (4) angezeigt wird und die ferne Instanz (2) am zumindest einen Kommunikationsgerät (13) angezeigt wird, wobei die Schirmansicht (1) eine Anzahl an Datenelementen (D) aufweist, die gemäß einem definierten statischen oder dynamischen Anzeigeschema (5) auf der Schirmansicht (1) dargestellt werden, welches die Anzeigeposition und Anzeigeform von Datenelementen (D) definiert und keine Informationen über aktuelle Werte der Datenelemente (D) enthält, und wobei das Verfahren die folgenden Schritte aufweist:
- Übermitteln eines dem Anzeigeschema (5) der Schirmansicht (1) zumindest teilweise entsprechendes Anzeigeschemas (5^{I}, 5^{II}) zumindest ein erstes Mal über den ersten Kommunikationspfad (18) von der Computereinheit (4) an das zumindest eine Kommunikationsgerät (13),
- Übermitteln der Werte von zumindest einem der Datenelemente (D) während der Kommunikationssitzung über den zweiten Kommunikationspfad (19) von der Computereinheit (4) an das zumindest eine Kommunikationsgerät (13), gemäß einem Protokoll, das gemäß einem Subscriber/Publisher-Modell funktioniert, bei dem keine direkte End-zu-End-Verbindung hergestellt wird, sondern die Kommunikation immer über den zwischengeschalteten Broker (14) vermittelt wird, wobei der Broker (14) Daten von einem Publisher erhält und einem oder mehreren Subscriber bereitstellt.
- Kombinieren der übermittelten Werte der Datenelemente (D) und des übermittelten Anzeigeschemas (5^{I}, 5") durch das zumindest eine Kommunikationsgerät (13), und
- Anzeigen der fernen Instanz (2) bei diesem Kommunikationsgerät (13).

2. Verfahren nach Anspruch 1, **dadurch gekennzeichnet, dass** die Schirmansicht (1) eine Anzeige einer Computereinheit (4) ist, die zur Steuerung einer Anlage (3) eines Anwenders (17) dient.

3. Verfahren nach einem der Ansprüche 1 bis 2, **dadurch gekennzeichnet, dass** zumindest ein Datenelement (D) Daten der Telemetrie-Ebene, wie etwa Messdaten von Messsensoren der Anlage, repräsentiert.

4. Verfahren nach einem der Ansprüche 1 bis 3, **dadurch gekennzeichnet, dass** die Datenübertragung gemäß dem zweiten Kommunikationspfad (19) verschlüsselt erfolgt.

5. Verfahren nach einem der Ansprüche 1 bis 4, **dadurch gekennzeichnet, dass** der zweite Kommunikationspfad (19) einen Rückkanal definiert.

6. System zur Bereitstellung einer fernen Instanz (2) einer Schirmansicht (1) zur Anzeige an zumindest einem Kommunikationsgerät (13), wobei eine Computereinheit (4), an der die Schirmansicht (1) angezeigt wird, über den ersten Kommunikationspfad (18) und den zweiten Kommunikationspfad (19) zum zumindest einen Kommunikationsgerät (13) verfügt, und wobei die Schirmansicht (1) eine Anzahl an Datenelementen (D) aufweist, die gemäß einem definierten statischen oder dynamischen Anzeigeschema (5) auf der Schirmansicht (1) dargestellt werden, wobei die Computereinheit (4) ein dem Anzeigeschema (5) der Schirmansicht (1) zumindest teilweise entsprechendes Anzeigeschema (5^{I}, 5") zumindest ein erstes Mal über den ersten Kommunikationspfad (18) an das zumindest eine Kommunikationsgerät (13) übermittelt, und wobei die Werte von zumindest einem der Datenelemente (D) während einer Kommunikationssitzung über den zweiten Kommunikationspfad (19) an das zumindest eine Kommunikationsgerät (13) übermittelt werden, wobei die Computereinheit (4) auf den ersten Kommunikationspfad (18) über eine Netzwerkschnittstelle (9) zugreift und auf den zweiten Kommunikationspfad (19) über einen Sicherheitscontroller (12) zugreift, wobei der Sicherheitscontroller (12) die Kommunikation über den zweiten Kommunikationspfad (19) gemäß einem Protokoll ausführt, das gemäß einem Subscriber/Publisher-Modell funktioniert, das keine direkte End-zu-End-Verbindung herstellt, sondern die Kommunikation immer über den zwischengeschalteten Broker (14) vermittelt, wobei der Broker (14) Daten von einem Publisher erhält und einem oder mehreren Subscriber bereitstellt.

7. System nach Anspruch 6, **dadurch gekennzeichnet, dass** der zweite Kommunikationspfad (19) von dem Sicherheitscontroller (12) über einen Broker (14) führt.

8. System nach einem der Ansprüche 6 oder 7, **dadurch gekennzeichnet, dass** der Sicherheitscontroller (12) eine Ver- und Entschlüsselungseinheit (21) aufweist.

9. System nach einem der Ansprüche 6 bis 8, **dadurch gekennzeichnet, dass** die Vorrichtung mehrere Instanzen (D', D", D'") der Datenelemente (D) erstellt, die in Abhängigkeit der Berechtigungen des zumindest einen Kommunikationsgeräts (13) selektiv an dieses Kommunikationsgerät (13) übermittelt werden.

## Claims

1. A method for generating and updating a remote instance (2) of a screen view (1) for at least one communication device (13) during a communication session, with a system comprising a computer unit (4), at least one communication device (13), a first communication path (18) between the computer unit (4) and the least one communication device (13), a second communication path (19) between the computer unit (4) and the least one communication device (13), a security controller (12) and a broker (14), wherein the remote instance (2) of a screen view (1) represents an image representation, which is displayed visibly for the communication partner at the communication device (13) as remote device, and which at least partially corresponds to the screen view (1), wherein the screen view (1) is displayed on a computer unit (4) during a communication session and the remote instance (2) is displayed on at least one communication device (13), wherein the screen view (1) has a number of data elements (D) that are presented on the screen view (1) in accordance with a defined static or dynamic display schema (5), which defines the display position and display form of data elements (D) and comprises no information about the actual value of data elements (D), wherein the method comprises following steps:
- Transmission of the display schema (5) of the screen view (1), which at least partially corresponds to a display schema (5^{I}, 5^{II}), to the at least one communication device (13) at least a first time via the first communication path (18),
- Transmission of the values of at least one of the data elements (D) to at least one communication device (13) via the second communication path (19) during the communication session, in accordance with a protocol which functions in accordance with a subscriber/publisher model, whereas no direct end-to-end connection is established, but the communication is always effected via the interposed broker (14), wherein the broker (14) receives data from a publisher and makes it available to one or more subscribers,
- Combination of received values of the data elements (D) and the received display schema (5^{I}, 5^{II}) through the at least one communication device (13), and
- Display of the remote instance (2) at this communication device (13).

2. The method according to claim 1, **characterized in that** the screen view (1) is a display of a computer unit (4) which serves to control an installation (3) of a user (17).

3. The method according to one of claims 1 to 2, **characterized in that** at least one data element (D) represents data of the telemetry level, such as measured data from measuring sensors of the installation.

4. The method according to one of claims 1 to 3, **characterized in that** the data transmission according to the second communication path (19) is encrypted.

5. The method according to one of claims 1 to 4, **characterized in that** the second communication path (19) defines a reverse channel.

6. An apparatus for making available a remote instance (2) of a screen view (1) for display on at least one communication device (13), wherein a computer unit (4) on which the screen view (1) is displayed has at the first communication path (18) and at the second communication path (19) to the at least one communication device (13), and wherein the screen view (1) has a number of data elements (D) that are presented on the screen view (1) in accordance with a defined static or dynamic display schema (5), wherein the computer unit (4) transmits a display schema (5^{I}, 5^{II}) that at least partially corresponds to the display schema (5) of the screen view (1) to the at least one communication device (13) at least a first time via the first communication path (18), wherein the values of at least one of the data elements (D) are transmitted to the at least one communication device (13) via the second communication path (19) during a communication session, wherein the computer unit (4) accesses the first communication path (18) via a network interface (9) and accesses the second communication path (19) via a security controller (12) and wherein the security controller (12) executes the communication via the second communication path (19) according to a protocol which functions in accordance with a subscrib-er/publisher model, which establishes no direct end-to-end connection, but the communication is always effected via the interposed broker (14), wherein the broker (14) receives data from a publisher and makes it available to one or more subscribers,

7. The apparatus according to claim 6, **characterized in that** the second communication path (19) feeds from the security controller (12) via a broker (14).

8. The apparatus according to one of claims 6 to 7, **characterized in that** the security controller (12) has an encryption and decryption unit (21).

9. The apparatus according to one of claims 6 to 8, **characterized in that** the device produces a plurality of instances (D', D", D'") of the data elements (D), which, depending on the authorizations of the at least one communication device (13), are transmitted selectively to this communication device (13).

## Revendications

1. Procédé de génération et de mise à jour d'au moins une instance éloignée (2) d'un affichage d'écran (1) dans au moins un appareil de communication (13) pendant une session de communication, au moyen d'un système constitué d'une unité informatique (4), d'au moins un appareil de communication (13), d'une première voie de communication (18) entre l'unité informatique (4) et l'au moins un appareil de communication (13), d'une seconde voie de communication (19) entre l'unité informatique (4) et l'au moins un appareil de communication (13), d'un contrôleur de sécurité (12) et d'un courtier (14), l'instance éloignée (2) d'un affichage d'écran (1) désignant une représentation sur écran, laquelle peut être visualisée par un partenaire de communication, et est affichée sur l'appareil de communication (13) en tant qu'appareil éloigné, et correspondant au moins partiellement à l'affichage d'écran (1), l'affichage d'écran (1) étant affiché sur une unité informatique (4) pendant la session de communication et l'instance éloignée (2) étant affichée sur au moins un appareil de communication (13), l'affichage d'écran (1) présentant un certain nombre d'éléments de données (D) qui sont représentés sur l'affichage d'écran (1) conformément à un schéma d'affichage (5) statique ou dynamique défini, lequel définit la position d'affichage et la forme d'affichage des éléments de données (D) et ne contient aucune information concernant des valeurs actuelles des éléments de données (D), et le procédé présentant les étapes suivantes :
- transmission d'un schéma d'affichage (5', 5") correspondant au moins partiellement au schéma d'affichage (5) de l'affichage d'écran (1) au moins une première fois par l'intermédiaire de la première voie de communication (18) de l'unité informatique (4) à l'au moins un appareil de communication (13),
- transmission des valeurs d'au moins un des éléments de données (D) pendant la session de communication par l'intermédiaire de la seconde voie de communication (19) de l'unité informatique (4) à l'au moins un appareil de communication (13) conformément à un protocole qui fonctionne conformément à un modèle abonné/éditeur, dans lequel aucune connexion de bout en bout directe n'est établie, mais la communication est toujours transmise par l'intermédiaire du courtier (14) intermédiaire, le courtier (14) recevant des données d'un éditeur et les fournissant à un ou plusieurs abonnés.
- combinaison des valeurs transmises des éléments de données (D) et du schéma d'affichage (5', 5") transmis par l'au moins un appareil de communication (13), et
- affichage de l'instance éloignée (2) sur ledit appareil de communication (13).

2. Procédé selon la revendication 1, **caractérisé en ce que** l'affichage d'écran (1) est un affichage d'une unité informatique (4) qui est utilisée pour commander une installation (3) d'un utilisateur (17).

3. Procédé selon l'une des revendications 1 et 2, **caractérisé en ce qu'**au moins un élément de données (D) représente des données de niveau de télémétrie, telles que des données de mesure de capteurs de mesure de l'installation.

4. Procédé selon l'une des revendications 1 à 3, **caractérisé en ce que** la transmission de données s'effectue sous forme codée conformément à la seconde voie de communication (19).

5. Procédé selon l'une des revendications 1 à 4, **caractérisé en ce que** la seconde voie de communication (19) définit un canal de retour.

6. Système de fourniture d'une instance éloignée (2) d'un affichage d'écran (1) permettant l'affichage sur au moins un appareil de communication (13), une unité informatique (4), sur laquelle l'affichage d'écran (1) est affiché, disposant de la première voie de communication (18) et de la seconde voie de communication (19) vers au moins un appareil de communication (13), et l'affichage d'écran (1) présentant un certain nombre d'éléments de données (D) qui sont représentés sur l'affichage d'écran (1) conformément à un schéma d'affichage (5) statique ou dynamique défini, l'unité informatique (4) transmettant un schéma d'affichage (5', 5") correspondant au moins partiellement au schéma d'affichage (5) de l'affichage d'écran (1) au moins une première fois par l'intermédiaire de la première voie de communication (18) à l'au moins un appareil de communication (13), et les valeurs d'au moins un des éléments de données (D) étant transmises à l'au moins un appareil de communication (13) par l'intermédiaire de la seconde voie de communication (19) pendant une session de communication, l'unité informatique (4) accédant àla première voie de communication (18) par l'intermédiaire d'une interface réseau (9) et accédant à la seconde voie de communication (19) par l'intermédiaire d'un contrôleur de sécurité (12), le contrôleur de sécurité (12) effectuant la communication par l'intermédiaire de la seconde voie de communication (19) conformément à un protocole, lequel fonctionne conformément à un modèle abonné/éditeur n'établissant pas de connexion de bout en bout directe, mais transmettant toujours la communication par l'intermédiaire du courtier (14) intermédiaire, le courtier (14) recevant des données d'un éditeur et les fournissant à un ou plusieurs abonnés.

7. Système selon la revendication 6, **caractérisé en ce que** la seconde voie de communication (19) part du contrôleur de sécurité (12) et passe par un courtier (14).

8. Système selon l'une des revendications 6 ou 7, **caractérisé en ce que** le contrôleur de sécurité (12) présente une unité de codage et de décodage (21).

9. Système selon l'une des revendications 6 à 8, **caractérisé en ce que** le dispositif crée plusieurs instances (D', D", D'") des éléments de données (D), qui, en fonction des autorisations de l'au moins un appareil de communication (13), sont transmises sélectivement audit appareil de communication (13).
